# EUROPEAN PATENT APPLICATION

(11) **EP 4 772 281 A1**
(43) Date of publication of application: **08.07.2026**
(21) Application number: 25226184.7
(22) Date of filing: 22.12.2025
(51) Int. Cl.: B05B 7/04

(54) **AIR AND WATER SPRAYING DEVICE FOR LENS PROCESSING MACHINE**

(30) Priority: 06.01.2025 KR 20250001344
(71) Applicant: Huvitz Co., Ltd., Anyang-si, Gyeonggi-do 14055 (KR)
(72) Inventor: KYON, Byung Woo, 14055 Anyang-si (KR); LEE, Hyeon Seob, 14055 Anyang-si (KR)
(74) Representative: Henkel & Partner mbB

(57) **Abstract**

Disclosed is an air and water spraying device for a lens processing machine for removing residues of lens processing or polishing a lens by spraying compressed air and water onto the lens being processed. The air and water spraying device (10) includes: a compressed air supply unit (200) configured to compress air to generate compressed air; a water supply unit (300) configured to supply water; a water supply valve (350) for discharging water from the water supply unit (300) or blocking discharge of water; and a discharge unit (100) configured to mix the compressed air supplied from the compressed air supply unit (200) and the water supplied from the water supply unit (300) and spray mixture of the compressed air and the water onto a lens (1) being processed.

## Description

### CROSS-REFERENCE TO RELATED APPLICATION

This application claims benefit of priority to Korean Patent Application No. 10-2025-0001344 filed on January 06, 2025, the entire contents of which are incorporated herein by reference.

### FIELD OF THE INVENTION

The present invention relates to an air and water spraying device for a lens processing machine, and more particularly, to an air and water spraying device for a lens processing machine capable of removing residues of lens processing or polishing a lens by spraying compressed air and water onto the lens being processed.

### BACKGROUND

Generally, in order to manufacture eyeglass lenses, a commercially available circular lens (commonly referred to as a blank lens) must be processed into a desired eyeglass lens shape, for example, the shape of an eyeglass frame, using a processing tool such as a grinder or a cutter.

In the processing course such as grinding and cutting of the lens, fine processing residues such as glass or plastic powder are generated. To remove such residues, a dry method of spraying air onto the lens being processed and a wet method of spraying water are used.

Conventionally, the wet method has been mainly used, but the wet method generates a large amount of wastewater, which is environmentally undesirable (see Korean Patent No. 10-2226357). Accordingly, a dry lens processing apparatus (a dry edger) using air instead of water is also being used (see Korean Patent No. 10-0363872).

However, even in the case of a dry lens processing apparatus, since water must be sprayed onto the lens being processed during the polishing process of the lens, that is, the gloss processing of the lens, a separate water spraying pump must be provided. Therefore, there is a need for the development of an apparatus capable of spraying both air and water onto a lens being processed without using a separate water spraying pump.

### [Prior Art Document]

(Patent Document 1) Korean Patent No. 10-2226357 (March 5, 2021)
(Patent Document 2) Korean Patent No. 10-0363872 (November 25, 2002)

### SUMMARY OF THE INVENTION

### TECHNICAL OBJECTS

An objective of the present invention is to provide an air and water spraying device for a lens processing machine that sprays compressed air and water onto a lens being processed to remove residues of lens processing or to polish the lens.

Another objective of the present invention is to provide an air and water spraying device for a lens processing machine capable of spraying air and water onto a lens being processed without using a separate water spraying pump (i.e., pumpless).

### TECHNICAL SOLUTION

To achieve the above objectives, the present invention provides an air and water spraying device comprising: a compressed air supply unit configured to compress air to generate compressed air; a water supply unit configured to supply water; a water supply valve for discharging water from the water supply unit or blocking discharge of water; and a discharge unit configured to mix the compressed air supplied from the compressed air supply unit and the water supplied from the water supply unit and spray mixture of the compressed air and the water onto a lens being processed.

Preferably, the discharge unit includes: (i) a compressed air supply line to which the compressed air generated by the compressed air supply unit is supplied; (ii) a water supply line to which water is supplied from the water supply unit; (iii) an air/water mixing section communicating with the compressed air supply line and the water supply line, wherein the compressed air supplied from the compressed air supply line and the water supplied from the water supply line are mixed therein, and an air/water mixture is discharged therefrom; and (iv) a housing in which the compressed air supply line, the water supply line, and the air/water mixing section are accommodated, and which has a discharge outlet formed at one end thereof to communicate with the air/water mixing section.

Preferably, the air/water mixing section has a smaller cross-sectional area than the compressed air supply line.

Preferably, a cross-sectional area of a passage through which air passes in the air/water mixing section is at least 5% smaller than a cross-sectional area of a passage through which air passes in the compressed air supply line.

Preferably, the compressed air supply line comprises: a first air supply line formed in a same direction as a compressed air supply direction of the compressed air supply unit; a second air supply line formed to be inclined at a predetermined angle with the first air supply line and communicating with the air/water mixing section; and a third air supply line connecting the first air supply line and the second air supply line.

Preferably, the water supply line is connected to the water supply unit through the water supply valve and a connection line, wherein the connection line is installed inside the first air supply line, wherein one end of the water supply valve is connected to the connection line inside the first air supply line, and the other end of the water supply valve is connected to the water supply line outside the first air supply line.

### EFFECTS OF THE DISCLOSURE

According to the air and water spraying device for a lens processing machine according to the present invention, compressed air and water can be sprayed onto a lens being processed to remove residues of lens processing or to polish the lens without using a separate water spraying pump.

### BRIEF DESCRIPTION OF THE DRAWINGS

FIGS. 1 and 2 are views showing an external perspective view of an air and water spraying device for a lens processing machine according to an embodiment of the present invention and a lens processing machine including the same, respectively.
FIGS. 3, 4 and 5 are a perspective view, a plan view, and a side view, respectively, for explaining the internal structure of the air and water spraying device according to an embodiment of the present invention.

### DETAILED DESCRIPTION OF THE PREFERRED EMBODIMENTS

Hereinafter, the present invention will be described in detail with reference to the accompanying drawings. In the following description, terms such as up, down, left, right, front, and rear are used to describe the relative positional relationship of components.

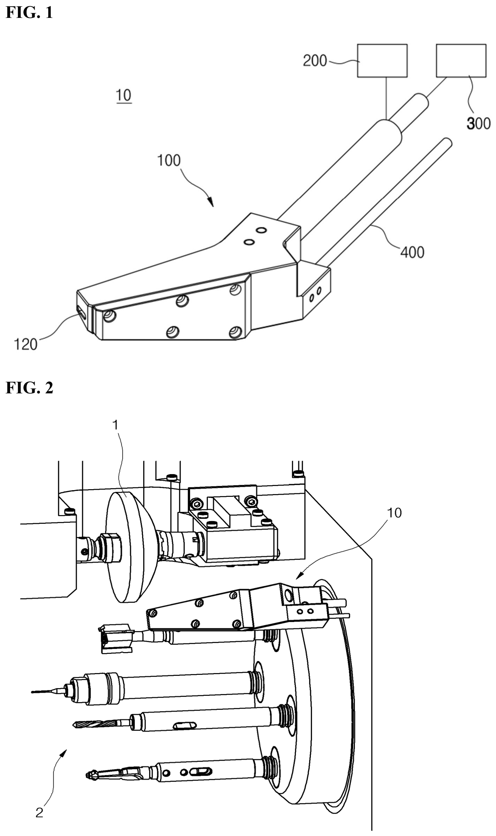

FIGS. 1 and 2 are views showing an external perspective view of an air and water spraying device for a lens processing machine according to an embodiment of the present invention and a lens processing machine including the same, respectively.

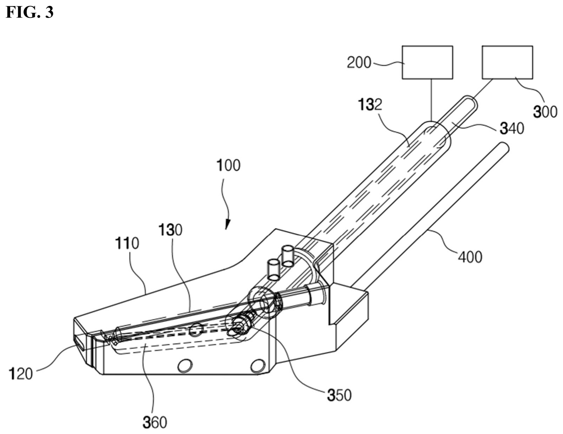

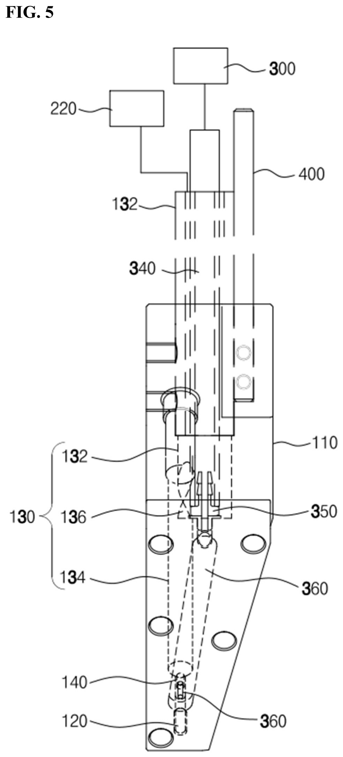

As shown in FIG. 1, the air and water spraying device 10 according to the present invention includes a compressed air supply unit 200, a water supply unit 300, and a discharge unit 100. The air and water spraying device 10 also includes a water supply valve 350 (See FIGS. 3, 4, 5).

The compressed air supply unit 200 is a device for generating compressed air by compressing air, and is, for example, a conventional air compressor.

The water supply unit 300 is a device for supplying water, and is, for example, a conventional water tank for accommodating water.

The water supply valve 350 is an on-off valve that discharges water from the water supply unit 300 or blocks the discharge of water. For example, the water supply valve 350 is a solenoid valve.

The discharge unit 100 mixes compressed air supplied from the compressed air supply unit 200 and water supplied from the water supply unit 300 and sprays the mixture onto a lens 1 being processed. A discharge outlet 120 through which the compressed air supplied from the compressed air supply unit 200 and the water supplied from the water supply unit 300 are discharged is formed at one end of the discharge unit 100.

In FIG. 1, reference numeral 400 denotes a fixing shaft 400 for mounting the air and water spraying device 10 to the lens processing machine.

As shown in FIG. 2, the air and water spraying device 10 according to the present invention is mounted around the lens 1 processed by processing tools 2 to spray (namely, eject) compressed air and water onto the lens 1 being processed through the discharge outlet 120 formed at one end of the discharge unit 100.

FIGS. 3, 4 and 5 are a perspective view, a plan view and a side view, respectively, for explaining the internal structure of the air and water spraying device according to an embodiment of the present invention.

As shown in FIGS. 3 to 5, the discharge unit 100 includes (i) a compressed air supply line 130, (ii) a water supply line 360, (iii) an air/water mixing section 140, and (iv) a housing 110.

The compressed air supply line 130 is a passage for compressed air through which compressed air generated by the compressed air supply unit 200 is supplied. The water supply line 360 is a passage for water through which water is supplied from the water supply unit 300.

The air/water mixing section 140 communicates with the compressed air supply line 130 and the water supply line 360. In the air/water mixing section 140, high-pressure compressed air supplied from the compressed air supply line 130 and water supplied from the water supply line 360 are mixed, and an air/water mixture is discharged.

Preferably, the air/water mixing section 140 has a smaller cross-sectional area, for example, a smaller diameter, than the compressed air supply line 130. Preferably, the cross-sectional area of the passage through which air passes in the air/water mixing section 140 is at least 5%, preferably at least 10%, more preferably at least 20%, for example, 20 to 80% smaller than the cross-sectional area of the passage through which air passes in the compressed air supply line 130.

By the Venturi effect, when a fluid passes through a narrow passage, the velocity of the fluid increases and the pressure decreases. Therefore, the moving speed of the compressed air passing through the air/water mixing section 140 becomes greater than the moving speed of the compressed air passing through the compressed air supply line 130, and the pressure of the compressed air passing through the air/water mixing section 140 becomes smaller than the pressure of the compressed air passing through the compressed air supply line 130 and the pressure of the water supply line 360.

Fluids flow from high pressure to low pressure. Therefore, when water is supplied from the water supply unit 300 to the water supply line 360, due to the pressure difference, the water inside the water supply line 360 is injected into the air/water mixing section 140, mixed more effectively with the compressed air passing through the air/water mixing section 140, and discharged. On the other hand, if water is not supplied from the water supply unit 300 to the water supply line 360, the compressed air only passes through the air/water mixing section 140 and only air is discharged.

The housing 110 accommodates the compressed air supply line 130, the water supply line 360, and the air/water mixing section 140. The discharge outlet 120 communicating with the air/water mixing section 140 is formed at one end of the housing 110, and the air/water mixture generated in the air/water mixing section 140 is discharged through the discharge outlet 120. The discharge outlet 120 is formed at one end of the housing 110 so as to face the lens 1 processed by the processing tool 2.

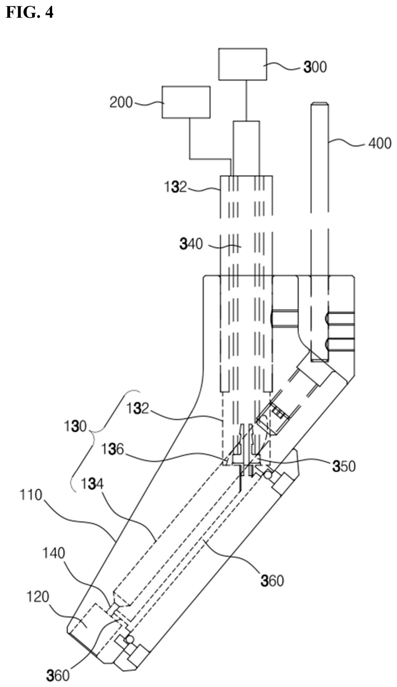

As shown in FIG. 4, the compressed air supply line 130 may consist of a first air supply line 132, a second air supply line 134, and a third air supply line 136.

The first air supply line 132 is formed in the same direction as the compressed air supply direction of the compressed air supply unit 200. The second air supply line 134 is formed to be inclined at a predetermined angle with the first air supply line 132 and communicates with the air/water mixing section 140. The third air supply line 136 connects the first air supply line 132 and the second air supply line 134. Preferably, the diameter of the second air supply line 134 is formed to be smaller than the diameter of the first air supply line 132, so that the air supply speed can be increased.

The water supply line 360 may be connected to the water supply unit 300 through the water supply valve 350 and a connection line 340. That is, water supplied from the water supply unit 300 is transferred to the water supply line 360 through the connection line 340 and the water supply valve 350.

As shown in FIGS. 3 to 5, the connection line 340 may be installed inside a part of the compressed air supply line 130, specifically, inside the first air supply line 132. In this case, the first air supply line 132 is arranged to surround the connection line 340, water is supplied to the inside of the connection line 340, and the compressed air is supplied to the outside of the connection line 340 and inside the first air supply line 132.

Here, as best shown in FIG. 4, one end of the water supply valve 350 may be connected to the connection line 340 inside the first air supply line 132, and the other end of the water supply valve 350 may be connected to the water supply line 360 outside the first air supply line 132.

As described above, the water supply valve 350 is an on-off valve that discharges water from the water supply unit 300 or blocks the discharge of water, and when opened, water in the connection line 340 is supplied to the water supply line 360 along with the discharge of compressed air.

According to the present invention, when the water supply valve 350 is simply opened and water is supplied from the water supply unit 300 to the water supply line 360, the compressed air and water are effectively mixed and sprayed by the passing pressure of the compressed air supplied from the compressed air supply unit 200 and also by the decreased pressure of the air/water mixing section 140 reduced by the Venturi effect.

Therefore, according to the present invention, there is no need to provide a separate pump for pressurizing and supplying water, and if necessary, only air can be sprayed or an air/water mixture can be sprayed only with the discharge unit 100.

Although the present invention has been described with reference to the accompanying drawings and exemplary embodiments, the present invention is not limited to the contents shown in the drawings and the above-described embodiments. Although reference numerals are indicated in the following claims to facilitate understanding, the scope of the following claims is not limited to the reference numerals and the contents shown in the drawings, and should be construed to cover all modifications, equivalent configurations, and functions of the exemplary embodiments.

## Claims

1. An air and water spraying device (10) comprising:
a compressed air supply unit (200) configured to compress air to generate compressed air;
a water supply unit (300) configured to supply water;
a water supply valve (350) for discharging water from the water supply unit (300) or blocking discharge of water; and
a discharge unit (100) configured to mix the compressed air supplied from the compressed air supply unit (200) and the water supplied from the water supply unit (300) and spray mixture of the compressed air and the water onto a lens (1) being processed.

2. The air and water spraying device (10) according to claim 1, wherein the discharge unit (100) includes:
(i) a compressed air supply line (130) to which the compressed air generated by the compressed air supply unit (200) is supplied;
(ii) a water supply line (360) to which water is supplied from the water supply unit (300);
(iii) an air/water mixing section (140) communicating with the compressed air supply line (130) and the water supply line (360), wherein the compressed air supplied from the compressed air supply line (130) and the water supplied from the water supply line (360) are mixed therein, and an air/water mixture is discharged therefrom; and
(iv) a housing (110) in which the compressed air supply line (130), the water supply line (360), and the air/water mixing section (140) are accommodated, and which has a discharge outlet (120) formed at one end thereof to communicate with the air/water mixing section (140).

3. The air and water spraying device (10) according to claim 2, wherein the air/water mixing section (140) has a smaller cross-sectional area than the compressed air supply line (130).

4. The air and water spraying device (10) according to claim 2, wherein a cross-sectional area of a passage through which air passes in the air/water mixing section (140) is at least 5% smaller than a cross-sectional area of a passage through which air passes in the compressed air supply line (130).

5. The air and water spraying device (10) according to claim 2, wherein the compressed air supply line (130) comprises:
a first air supply line (132) formed in a same direction as a compressed air supply direction of the compressed air supply unit (200);
a second air supply line (134) formed to be inclined at a predetermined angle with the first air supply line (132) and communicating with the air/water mixing section (140); and
a third air supply line (136) connecting the first air supply line (132) and the second air supply line (134).

6. The air and water spraying device (10) according to claim 5, wherein the water supply line (360) is connected to the water supply unit (300) through the water supply valve (350) and a connection line (340), wherein the connection line (340) is installed inside the first air supply line (132), wherein one end of the water supply valve (350) is connected to the connection line (340) inside the first air supply line (132), and the other end of the water supply valve (350) is connected to the water supply line (360) outside the first air supply line (132).
